Europäisches Patentamt

European Patent Office

Office européen des brevets

(19)

(11) **EP 1 488 536 B1**

(12) **FASCICULE DE BREVET EUROPEEN**

(45) Date de publication et mention
de la délivrance du brevet:
**01.06.2005 Bulletin 2005/22**

(21) Numéro de dépôt: **03730292.4**

(22) Date de dépôt: **07.03.2003**

(51) Int Cl.7: **H04B 1/707**

(86) Numéro de dépôt international:
**PCT/FR2003/000744**

(87) Numéro de publication internationale:
**WO 2003/081798 (02.10.2003 Gazette 2003/40)**

(54) **PROCEDE DE TRAITEMENT DE SIGNAL EN PRESENCE D INTERFERENCES**

VERFAHREN ZUR SIGNALVERARBEITUNG IN GEGENWART VON STÖRUNGEN

METHOD FOR TREATING A SIGNAL IN THE PRESENCE OF INTERFERENCE

(84) Etats contractants désignés:
**DE FR GB IT**

(30) Priorité: **22.03.2002 FR 0203633**

(43) Date de publication de la demande:
**22.12.2004 Bulletin 2004/52**

(73) Titulaire: **Thales**
**92200 Neuilly Sur Seine (FR)**

(72) Inventeurs:
• **COATANTIEC, Blandine**
**F-94117 Arcueil Cedex (FR)**

• **REVOL, Marc**
**F-94117 Arcueil Cedex (FR)**
• **MARTIN, Nicolas**
**F-94117 Arcueil Cedex (FR)**
• **ISSLER, Jean-Luc, Thales Intellectual Property**
**94117 Arcueil Cedex (FR)**

(74) Mandataire: **Beylot, Jacques**
**THALES Intellectual Property**
**31-33 avenue Aristide Briand**
**94117 Arcueil Cédex (FR)**

(56) Documents cités:
**EP-A- 1 061 545**          **US-A- 6 021 156**

**Description**

La présente invention se rapporte aux procédés de traitement de signal en présence d'interférences, plus particulièrement lorsque ce signal est composé d'une porteuse unique modulée selon deux bandes de fréquences, l'une large et l'autre étroite, et que les interférences consistent en des raies discrètes provenant par exemple d'impulsions réparties selon un mode quasi aléatoire. Plus généralement, l'invention permet d'augmenter la robustesse du traitement des signaux de navigation par satellite composés d'une porteuse modulée par deux bandes de fréquence.

L'invention s'applique notamment dans ce cadre à la modulation dite en bande E5b des systèmes de navigation par satellite actuellement à l'étude, et lorsque ces systèmes sont brouillés par les signaux des systèmes de mesure de distance dits DME. Elle s'applique également à d'autres bandes de fréquence, comme L1, L2, G1, G2, E6, C et éventuellement L5. Ces bandes sont celles des systèmes GPS, GLONASS et GALILEO. Pour simplifier la description, celle-ci sera limitée dans la suite de ce texte au signal dit E5 prévu pour le système de navigation Galileo, lorsque celui-ci est brouillé par des interférences provenant des signaux du système de mesure de distance de type DME, qui est généralement couplé avec des balises VOR.

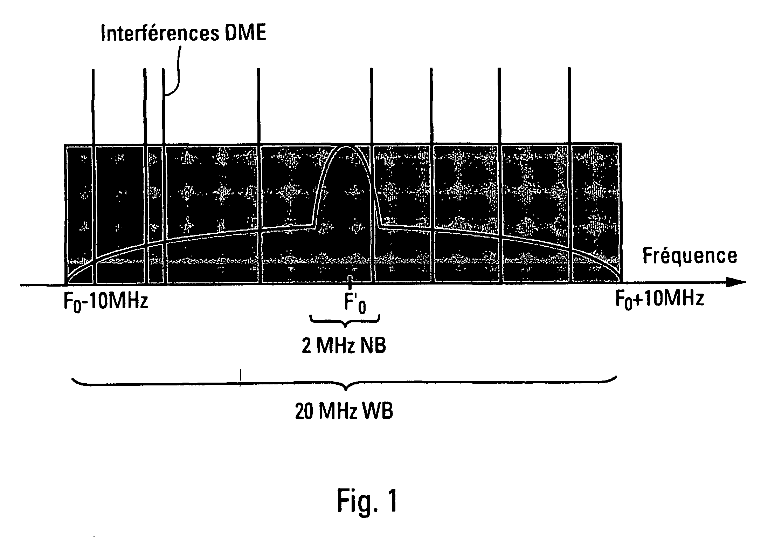

Le spectre de ce signal est représenté sur la figure 1. Il est formé par un premier signal ayant un lobe principal dans une bande étroite dite NB de 2MHz par exemple et par un deuxième signal ayant un lobe principal dans une bande large dite WB de 20 MHz par exemple, sur des porteuses à la fréquence FO. Dans l'exemple considéré la puissance émise est répartie de manière égale entre les bandes large et étroite, ce qui entraîne pour une puissance identique sur les deux signaux que le lobe principal du spectre dans le cas de la bande large est moins haut que dans le cas de la bande étroite, comme on le voit sur la figure. Les fréquences des codes d'étalement sont synchronisées entre la bande large et la bande étroite et les flux de données sont les mêmes entre ces deux bandes. Ces signaux sont donc synchrones et en phase (éventuellement en quadrature). Le signal à bande étroite peut être du type BPSK (Binary Phase Shift Keing ) ou BOC ( Binary Offset Carrier ), tandis que le signal à bande large peut aussi être du type BPSK ou BOC.

Compte tenu des puissances mises en jeu dans les satellites d'une part, et dans les systèmes DME d'autre part, les signaux parasites DME sont à l'origine de raies d'interférence dont la puissance est largement supérieure à des signaux utiles.

Pour éliminer les brouillages provenant de ces signaux DME, il est connu d'effectuer un traitement dans lequel on coupe le signal reçu lorsqu'un tel signal de brouillage est détecté, ce qui entraîne bien évidemment une perturbation de la réception des signaux utiles. Ce système est connu sous le terme anglo-saxon de "blanking".

EP-A-1 016 545 décrit un récepteur permettant de traiter des signaux GPS (bande étroite) et GLONASS (large bande). Chaque signal utilise une bande de code et une bande de phase propres.

Selon le nombre de signaux DME reçus, la proportion de coupures, ou de "blanking", est plus ou moins grande et à la limite on ne reçoit plus assez de signal et il n'y a alors aucun moyen de récupérer un signal utile.

Dans la pratique, on obtient quand même un tel signal utile et on peut le traiter et en tirer les informations souhaitées.

Pour améliorer les résultats, l'invention propose un procédé de traitement de signal en présence d'interférences, ce signal comportant un premier canal à large bande et un deuxième canal à bande étroite modulant une même porteuse, principalement caractérisé en ce que l'on utilise une seule boucle de phase et une seule boucle de code pour traiter les deux canaux simultanément.

Selon une autre caractéristique, dans la boucle de phase on génère un signal à la fréquence de la porteuse, on le déphase en sinus et cosinus et on démodule de manière synchrone avec ces deux signaux déphasés le premier canal pour obtenir un signal $I_{WB}$ et un signal $O_{WB}$ et le deuxième canal pour obtenir un signal $I_{NB}$ et un signal $Q_{NB}$.

Selon une autre caractéristique, dans la boucle de code on génère un signai à la fréquence du code du signal de bande large, on génère à partir de ce signai un premier code ponctuel et un premier code $\Delta$, on multiplie le premier code $\Delta$ respectivement avec le signal $I_{NB}$ et le signal $Q_{NB}$, on multiplie le premier code ponctuel avec le signal $I_{NB}$ et le signal $Q_{NB}$, on intègre les signaux résultant de ces multiplications pour obtenir des signaux $I_{PNB}$ , $I_{\Delta NB}$, $Q_{PNB}$ et $Q_{\Delta NB}$, on génère à partir du signal à fréquence de code un deuxième signal $\Delta$ et un deuxième signal ponctuel, on multiplie le deuxième signal $\Delta$ respectivement avec le signal $I_{WB}$ et le signal $Q_{WB}$, on multiplie le deuxième signal ponctuel par le signal $I_{WB}$ et le signal $Q_{WB}$, et on intègre les signaux résultant de ces multiplications pour obtenir des signaux $I_{PWB}$, $I_{\Delta WB}$, $Q_{PWB}$ et $Q_{\Delta WB}$.

Selon une autre caractéristique, on utilise les signaux $I_{PWB}$, $I_{\Delta WB}$, $Q_{PNB}$ et $Q_{\Delta NB}$ dans un premier discriminateur de phase commun aux deux signaux large bande et bande étroite pour obtenir la phase de la porteuse et piloter après filtrage l'oscillateur permettant d'obtenir ledit signal à la fréquence de la porteuse.

Selon une autre caractéristique, dans le premier discriminateur de phase on mélange avant la discrimination proprement dite les signaux d'entrée selon des proportions déterminés par les formules :

$$I_{p\,opt} = \alpha\,I_{pW_B} + \beta\ _{Ip\,NB}$$

$$Q_{p\,opt} = \alpha Q_{p\,WB} + \beta\; Q_{p\,NB}$$

Selon une autre caractéristique, les paramètres $\alpha$ et $\beta$ sont déterminés par les formules :

$$\alpha = \frac{\sigma_{NB}^2}{\sigma_{NB}^2 + \sigma_{WB}^2}$$

$$\beta = \frac{\sigma_{WB}^2}{\sigma_{NB}^2 + \sigma_{WB}^2}$$

dans lesquelles les paramètres $\sigma_{NB}$ et $\sigma_{WB}$ sont estimés à partir du nombre d'échantillons supprimés C et du nombre total d'échantillons $N_o$ par les formules :

$$\sigma_{wb}^2 = 1/(C/N_{0\;WB})$$

$$\sigma_{Nb}^2 = 1/(C/N_{0\;NB})$$

Selon une autre caractéristique, on utilise les signaux $I_{PWB}$, $I_{\Delta WB}$, $Q_{PWB}$, $Q_{\Delta WB}$, $I_{PNB}$, $I_{\Delta NB}$, $Q_{PNB}$ et $Q_{\Delta NB}$ dans un deuxième discriminateur de phase commun aux deux canaux large bande et bande étroite pour obtenir le calage des deux codes et piloter après filtrage l'oscillateur permettant d'obtenir ledit signal à la fréquence de code.

Selon une autre caractéristique, dans le deuxième discriminateur de phase on mélange avant la discrimination proprement dite les signaux d'entrée selon des proportions déterminés par les formules :

$$I_{\Delta\;opt} = (aI_{\Delta\;WB} + bI_{\Delta\;NB})$$

$$Q_{\Delta\;opt} = (a\,Q_{\Delta\;WB} + bQ_{\Delta\;NB})$$

Selon une autre caractéristique, les paramètres a et b sont déterminés par les formules :

$$a = \frac{\rho_{WB}^2\sigma_{NB}^2}{(\rho_{NB}^2\sigma_{WB}^2 + \rho_{WB}^2\sigma_{NB}^2)} \; x \; \frac{1}{S_{WB}}$$

$$b = \frac{\rho_{NB}^2\sigma_{WB}^2}{(\rho_{NB}^2\sigma_{WB}^2 + \rho_{WB}^2\sigma_{NB}^2)} \; x \; \frac{1}{S_{NB}}$$

dans lesquelles les termes $S_{WB}$ et $S_{MB}$ correspondent aux pentes des courbes de réponse des discriminateurs mesurées au niveau central de ces courbes, et les termes $\rho_{WB}$ et $\rho_{MB}$ sont les pentes normalisées des discriminateurs obtenues par division de la pente S par un

facteur $\sigma_\Delta$ déterminé par la formule :

$$\sigma_\Delta = [1 - A(2d)]$$

dans laquelle A est la fonction d'autorisation normalisée du code d'étalement filtré telle que A (0) = 1, et 2d est la valeur de l'écart entre le code avancé et le code retard utilisé pour générer le code $\Delta$.

D'autres particularités et avantages de l'invention apparaîtront clairement dans la description suivante, présentée à titre d'exemple non limitatif et en regard des figures annexées qui représentent :

- la figure 1, un graphique du spectre du signal à traiter; et

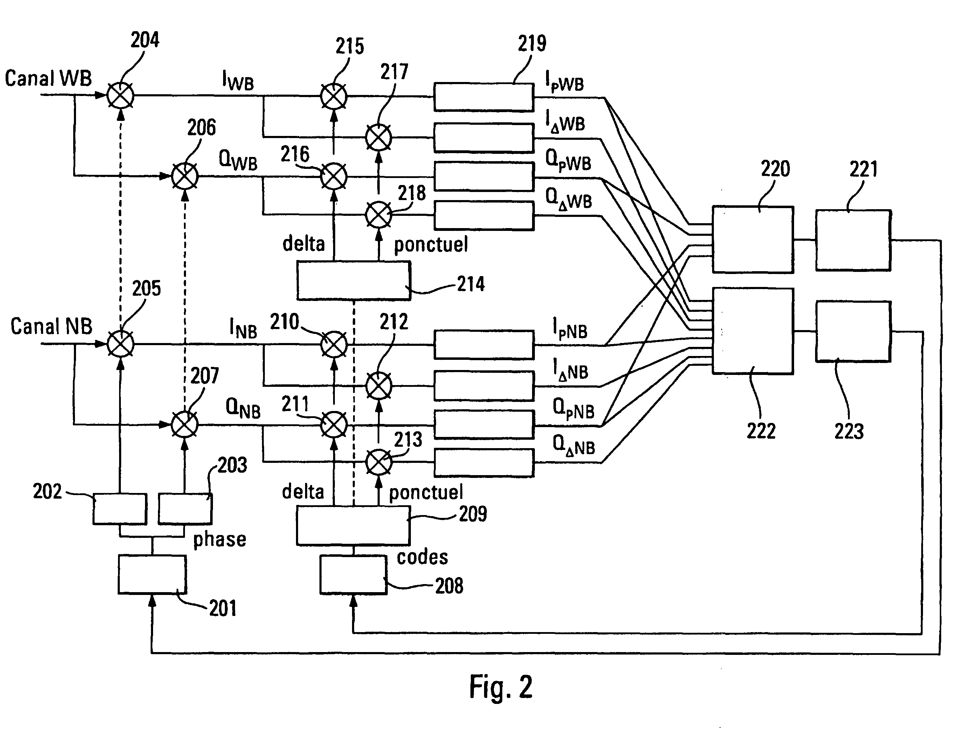

- la figure 2, un schéma bloc d'un dispositif permettant de mettre en oeuvre le procédé selon l'invention.

Les signaux d'entrée du dispositif permettant de mettre en oeuvre l'invention sont filtrés de manière usuelle en gardant pour le signal large bande la totalité du lobe principal du spectre, de manière à conserver la précision du code, et en éliminant les lobes secondaires du signal à bande étroite dans la mesure où ils existent. Ceci permet de limiter la probabilité d'interférence par les signaux DME, qui sont statistiquement réparties sur la totalité de la bande. Comme on le voit sur la figure 1, une grande partie des signaux DME sont situés à l'extérieur du lobe principal du signal à bande étroite et l'occupation temporelle d'interférence DME est statistiquement dix fois plus faible pour la bande étroite que pour la bande large, dans l'exemple considéré.

Si l'on utilise alors la technique de "blanking", les pertes, exprimées en nombre d'échantillons C supprimés sur le nombre d'échantillons total NO sont donnés par :

$$C/N_0 = 1 - \theta \qquad (1)$$

et en décibels par :

$$C/N_{0\,dB} = 10\log(1 - \theta) \qquad (2)$$

Dans cette formule, $\theta$ est la proportion de temps de coupure, qui est statistiquement 10 fois plus faible pour le signal bande étroite que pour le signal large bande, si l'on effectue bien le filtrage décrit ci-dessus.

La sortie de la boucle de phase, qui sera décrite plus loin, est appliquée à un oscillateur contrôlé numériquement 201 qui délivre un signal à la fréquence de la porteuse. Celui-ci est ensuite déphasé en sinus et cosinus dans deux déphaseurs 202, 203.

Le signal en cosinus est alors appliqué au signal large bande dans un multiplicateur 204 et au signal bande étroite dans un multiplicateur 205.

Le signal en sinus est appliqué au signal large bande dans un multiplicateur 206 et au signal bande étroite dans un multiplicateur 207.

La porteuse est ainsi démodulée sur chaque canal pour obtenir sur chacun de ces canaux les signaux connus classiquement comme I et Q.

La sortie de la boucle de code, qui sera décrite plus loin, est appliquée à un oscillateur contrôlé numériquement 208 qui délivre un signal à la fréquence du code du signal de bande large. Celui-ci est appliqué à un premier générateur de code d'étalement 209 qui délivre d'une part le code dit ponctuel et d'autre part le code dit $\Delta$, correspondant à la différence entre un code retardé et un code avancé, ces codes étant adaptés à celui reçu sur le canal à bande étroite.

Le code $\Delta$ est multiplié avec le signal I du canal à bande étroite dans un multiplicateur 210 et avec le signal Q de ce même canal dans un multiplicateur 211.

Le code ponctuel lui est multiplié avec le signal I de ce canal à bande étroite dans un multiplicateur 212 et avec le signal Q du même canal dans un multiplicateur 213.

Le signal de fréquence de code sortant de l'oscillateur 208 est également appliqué à un deuxième générateur de signal de code 214, analogue au générateur 209 mais adapté au code présent sur le canal large bande. Il délivre lui aussi un code ponctuel et un code $\Delta$.

Le code $\Delta$ est multiplié avec le signal I du canal large bande dans un multiplicateur 215 et avec le signal Q de ce même canal dans un multiplicateur 216.

Le signal ponctuel est multiplié avec le canal I de ce canal large bande dans un multiplicateur 217 et avec le signal Q de ce canal dans un multiplicateur 218.

Les signaux en sortie de tous ces multiplicateurs sont intégrés dans un ensemble d'intégrateurs 219, un pour chaque signal résultant des multiplications.

Dans le canal large bande, les signaux déchargés par les intégrateurs sont respectivement $I_{pWB}$, $I_{\Delta WB}$, $Q_{pWB}$, $Q_{\Delta WB}$, cette notation signifiant qu'il s'agit du signal I ou Q pour le code ponctuel ou le code $\Delta$ dans le canal large bande.

De la même manière les intégrateurs du canal à bande étroite déchargent quatre signaux $I_{pNB}$, $I_{\Delta NB}$, $Q_{pNB}$, $Q_{\Delta NB}$.

Selon l'invention, ces signaux sont utilisés dans deux discriminateurs de phase différents, mais communs aux deux signaux large bande et bande étroite, l'un 220 pour obtenir la phase de la porteuse et l'autre 222 pour obtenir le calage des deux codes des canaux.

Selon l'invention le discriminateur de phase 220 peut utiliser une technique connue sous le nom de discriminateur étendu, plus adapté dans les applications aéronautiques pour pouvoir supporter une très large dynamique.

Classiquement, un tel discriminateur fonctionne à partir d'un signal I et d'un signal Q, et selon l'invention ces signaux sont des signaux optimisés appelés Ip opt et Qp opt obtenus par mixage des signaux $I_{pWB}$, $Q_{pWB}$, $I_{pNB}$, et $Q_{pNB}$ en utilisant les formules :

$$I_{p\ opt} = \alpha\ I_{pW_B} + \beta_{Ip\ NB} \qquad (3)$$

$$Q_{p\ opt} = \alpha Q_{p\ WB} + \beta\ Q_{p\ NB} \qquad (4)$$

Dans ces formules $\alpha$ et $\beta$ sont donnés par :

$$\alpha = \frac{\sigma_{NB}^2}{\sigma_{NB}^2 + \sigma_{WB}^2} \qquad (5)$$

$$\beta = \frac{\sigma_{WB}^2}{\sigma_{NB}^2 + \sigma_{WB}^2} \qquad (6)$$

Les paramètres $\sigma_{NB}$ et $\sigma_{WB}$ correspondent respectivement aux niveaux de bruit sur le canal large bande et sur le canal bande étroite. Ils sont estimés à partir des paramètres C/NO par les formules :

$$\sigma_{wb}^2 = 1/(C/N_{0\ WB}) \qquad (7)$$

$$\sigma_{Nb}^2 = 1/(C/N_{0\ NB}) \qquad (8)$$

Les pondérations qui sont ainsi appliquées permettent d'optimiser le rapport $C/N_0$ dans la boucle. En effet le niveau du signal est le même dans les deux canaux par hypothèse, mais les niveaux de brouillage sont différents parce que l'effet d'interférence DME dépend de la largeur de bande du canal ainsi qu'on l'a montré plus haut.

Pour obtenir ces paramètres $\sigma$, on effectue, à l'aide d'un dispositif non représenté, une estimation statistique sur des échantillons des signaux Ip et Iq prélevés à une fréquence relativement basse, 1 kHz par exemple, en faisant porter cette estimation sur plusieurs secondes, ce qui est possible car les signaux DME sont constants sur des distances de plusieurs kilomètres en raison des caractéristiques intrinsèques du système DME.

Le signal ainsi obtenu en sortie du corrélateur 220 est filtré de manière classique par un filtre 221, puis appliqué à l'entrée de l'oscillateur 201, ce qui ferme la boucle de phase.

Le discriminateur de code utilise lui des signaux I$\Delta$ et Q$\Delta$ optimisés à partir des signaux $I_{\Delta WB}$, $Q_{\Delta WB}$, $I_{\Delta NB}$ et $Q_{\Delta NB}$ par application des formules :

$$I_{\Delta\ opt} = (aI_{\Delta\ WB} + bI_{\Delta\ NB}) \qquad (9)$$

$$Q_{\Delta\ opt} = (aQ_{\Delta\ WB} + bQ_{\Delta\ NB}) \qquad (10$$

Dans ces formules a et b sont donnés par :

$$a = \frac{\rho_{WB}{}^2 \sigma_{NB}{}^2}{(\rho_{NB}{}^2 \sigma_{WB}{}^2 + \rho_{WB}{}^2 \sigma_{NB}{}^2)} \times \frac{1}{S_{WB}} \qquad (11)$$

$$b = \frac{\rho_{NB}{}^2 \sigma_{WB}{}^2}{(\rho_{NB}{}^2 \sigma_{WB}{}^2 + \rho_{WB}{}^2 \sigma_{NB}{}^2)} \times \frac{1}{S_{NB}} \qquad (12)$$

Dans ces formules les termes $\sigma_{WB}$ et $\sigma_{NB}$ ont été définis plus haut par les formules (7) et (8). Les termes $S_{WB}$ et $S_{MB}$ correspondent quant à eux aux pentes des courbes de réponse des discriminateurs 220 et 222, ces pentes étant mesurées au niveau central de cette courbe, qui correspond en principe à la réponse autour de la fréquence porteuse.

$\rho_{WB}$ et $\rho_{MB}$ sont les pentes normalisées du discriminateur, respectivement sur les canaux large bande et bande étroite. Pour obtenir cette pente normalisée, on divise la pente S correspondante par le facteur $\sigma_{\Delta}$, représentatif de l'écart type du bruit sur les signaux $I\Delta$ et $Q\Delta$, donné par la formule :

$$\sigma_{\Delta} = [1 - A(2d)] \qquad (13)$$

Dans cette formule, A désigne la fonction d'autocorrélation normalisée du code d'étalement filtré, telle que A(0) = 1, et 2d est la valeur de l'écart entre le code avance et le code retard utilisé pour générer le code $\Delta$.

Le signal en sortie du discriminateur 222 est alors filtré très classiquement par un filtre 223 et appliqué à l'entrée de l'oscillateur de code 208, ce qui boucle la boucle de code.

La robustesse de la boucle de porteuse est la même que celle du canal bande étroite prise isolement. Quant le rapport $C/N_0$ sur le canal large bande devient trop bas à cause des interférences DME, le rapport global $C/N_0$ du dispositif tend vers celui du canal bande étroite pris isolement. Le seuil de poursuite de la boucle de porteuse est donc effectivement celui du canal bande étroite.

La précision de la boucle de code est presque celle du canal large bande pris isolement quand le pourcentage d'occupation du temps par les interférences est plus bas que 95%. Quant ce pourcentage se rapproche de 100 %, la précision du code devient alors celle du canal bande étroite pris isolément.

Entre ces deux extrémités, on constate une synergie qui provient de ce que la robustesse sur la porteuse de l'un des canaux permet d'améliorer la détection du code sur l'autre. En d'autres termes le système selon l'invention bénéficie de la robustesse du canal bande étroite et de la précision du canal large bande quand le niveau d'interférence demeure relativement raisonnable.

On soulignera aussi que l'invention est particulièrement simple car elle n'utilise qu'une seule boucle de porteuse et qu'une seule boucle de phase, et qu'elle n'a pas besoin d'un système de détection logique pour savoir lequel des deux canaux est à utiliser en fonction des circonstances.

## Revendications

1. Procédé de traitement de signal en présence d'interférences, ce signal comportant un premier canal à large bande (WB) et un deuxième canal à bande étroite (NB) modulant une même porteuse (FO), **caractérisé en ce que** l'on utilise une seule boucle de phase (220,221,201-207) et une seule boucle de code (222,223, 208-218) pour traiter les deux canaux simultanément.

2. Procédé selon la revendication 1, **caractérisé en ce que** dans la boucle de phase on génère (201) un signal à la fréquence de la porteuse, on le déphase en sinus et cosinus (202,203) et on démodule de manière synchrone avec ces deux signaux déphasés le premier canal pour obtenir un signal $I_{WB}$ et un signal $Q_{WB}$ (204,206) et le deuxième canal pour obtenir un signal $I_{NB}$ et un signal $Q_{NB}$ (205,207).

3. Procédé selon la revendication 2, **caractérisé en ce que** dans la boucle de code on génère (208) un signal à la fréquence du code du signal de bande large, on génère à partir de ce signal un premier code ponctuel et un premier code $\Delta$ (209), on multiplie le premier code $\Delta$ respectivement avec le signal $I_{NB}$ et le signal $Q_{NB}$ (210,211), on multiplie le premier code ponctuel avec le signal $I_{NB}$ et le signal $Q_{NB}$ (212,213), on intègre les signaux résultant de ces multiplications pour obtenir des signaux $I_{PNB}$, $I_{\Delta NB}$, $Q_{PNB}$ et $Q_{\Delta NB}$, on génère à partir (214) du signal à fréquence de code un deuxième signal $\Delta$ et un deuxième signal ponctuel, on multiplie le deuxième signal $\Delta$ respectivement avec le signal $I_{WB}$ et le signal $Q_{WB}$ (215,216), on multiplie le deuxième signal ponctuel par le signal $I_{WB}$ et le signal $Q_{WB}$ (217,218), et on intègre les signaux résultant de ces multiplications pour obtenir des signaux $I_{PWB}$, $I_{\Delta WB}$, $Q_{PWB}$ et $Q_{\Delta WB}$.

4. Procédé selon la revendication 3, **caractérisé en ce qu'**on utilise les signaux $I_{PWB}$, $I_{\Delta WB}$, $Q_{PNB}$ et $Q_{\Delta NB}$ dans un premier discriminateur de phase (220) commun aux deux signaux large bande et bande étroite pour obtenir la phase de la porteuse et piloter après filtrage (221) l'oscillateur (201) permettant d'obtenir ledit signal à la fréquence de la porteuse.

**5.** Procédé selon la revendication 4, **caractérisé en ce que** dans le premier discriminateur de phase (220) on mélange avant la discrimination proprement dite les signaux d'entrée selon des proportions déterminés par les formules :

$$I_{p\ opt} = \alpha\ I_{p\ W_B} + \beta\ _{lp\ NB}$$

$$Q_{p\ opt} = \alpha Q_{p\ WB} + \beta\ Q_{p\ NB}$$

**6.** Procédé selon la revendication 5, **caractérisé en ce que** les paramètres $\alpha$ et $\beta$ sont déterminés par les formules :

$$\alpha = \frac{\sigma_{NB}^2}{\sigma_{NB}^2 + \sigma_{WB}^2}$$

$$\beta = \frac{\sigma_{WB}^2}{\sigma_{NB}^2 + \sigma_{WB}^2}$$

dans lesquelles les paramètres $\sigma_{NB}$ et $\sigma_{WB}$ sont estimés à partir du nombre d'échantillons supprimés C et du nombre total d'échantillons $N_o$ par les formules :

$$\sigma_{wb}^2 = 1/(C/N_{0\ WB})$$

$$\sigma_{Nb}^2 = 1/(C/N_{0\ NB})$$

**7.** Procédé selon l'une quelconque des revendications 5 ou 6, **caractérisé en ce qu'**on utilise les signaux $I_{PWB}$, $I_{\Delta WB}$, $Q_{PWB}$, $Q_{\Delta WB}$, $I_{PNB}$, $I_{\Delta NB}$, $Q_{PNB}$ et $Q_{\Delta NB}$ dans un deuxième discriminateur de phase (222) commun aux deux canaux large bande et bande étroite pour obtenir le calage des deux codes et piloter après filtrage (223) l'oscillateur (208) permettant d'obtenir ledit signal à la fréquence de code.

**8.** Procédé selon la revendication 7, **caractérisé en ce que** dans le deuxième discriminateur de phase (222) on mélange avant la discrimination proprement dite les signaux d'entrée selon des proportions déterminés par les formules :

$$I_{\Delta\ opt} = (aI_{\Delta\ WB} + bI_{\Delta\ NB})$$

$$Q_{\Delta\ opt} = (aQ_{\Delta\ WB} + bQ_{\Delta\ NB})$$

**9.** Procédé selon la revendication 8, **caractérisé en ce que** les paramètres a et b sont déterminés par les formules :

$$a = \frac{\rho_{WB}^2\sigma_{NB}^2}{(\rho_{NB}^2\sigma_{WB}^2 + \rho_{WB}^2\sigma_{NB}^2)}\ x\ \frac{1}{S_{WB}}$$

$$b = \frac{\rho_{NB}^2\sigma_{WB}^2}{(\rho_{NB}^2\sigma_{WB}^2 + \rho_{WB}^2\sigma_{NB}^2)}\ x\ \frac{1}{S_{NB}}$$

dans lesquelles les termes $S_{WB}$ et $S_{MB}$ correspondent aux pentes des courbes de réponse des discriminateurs (220,222) mesurées au niveau central de ces courbes, et les termes $\rho_{WB}$ et $\rho_{MB}$ sont les pentes normalisées des discriminateurs obtenues par division de la pente S par un facteur $\sigma_{\Delta}$ déterminé par la formule :

$$\sigma_{\Delta} = [1 - A(2d)]$$

dans laquelle A est la fonction d'autorisation normalisée du code d'étalement filtré telle que A (0) = 1, et 2d est la valeur de t'écart entre le code avancé et le code retard utilisé pour générer le code $\Delta$.

**Patentansprüche**

**1.** Verfahren zur Signalverarbeitung in Gegenwart von Interferenzen, wobei dieses Signal einen ersten Kanal mit breitem Frequenzband (WB) und einen zweiten Kanal mit schmalem Frequenzband (NB) aufweist, die eine gleiche Trägerwelle (FO) modulieren, **dadurch gekennzeichnet, dass** man eine einzige Phasenschleife (220, 221, 201-207) und eine einzige Codeschleife (222, 223, 208-218) verwendet, um die beiden Kanäle gleichzeitig zu verarbeiten.

**2.** Verfahren nach Anspruch 1, **dadurch gekennzeichnet, dass** in der Phasenschleife ein Signal mit der Frequenz der Trägerwelle erzeugt wird (201), dass das Signal gemäß Sinus und Kosinus phasenverschoben wird (202, 203), und dass mit diesen beiden phasenverschobenen Signalen synchron der erste Kanal demoduliert wird, um ein Signal $I_{WB}$ und ein Signal $Q_{WB}$ (204, 206) zu erhalten, und der zweite Kanal demoduliert wird, um ein Signal $I_{NB}$ und ein Signal $Q_{NB}$ (205, 207) zu erhalten.

**3.** Verfahren nach Anspruch 2, **dadurch gekennzeichnet, dass** in der Codeschleife ein Signal mit der Frequenz des Codes des Breitbandsignals erzeugt wird (208), dass ausgehend von diesem Signal ein erster punktueller Code und ein erster Δ-Code (209) erzeugt werden, dass der erste Δ-Code mit dem Signal $I_{NB}$ bzw. mit dem Signal $Q_{NB}$ multipliziert wird (210, 211), dass der erste punktuelle Code mit dem Signal $I_{NB}$ und mit dem Signal $Q_{NB}$ multipliziert wird (212, 213), dass die aus diesen Multiplikationen entstehenden Signale integriert werden, um Signale $I_{pNB}$, $I_{\Delta NB}$, $Q_{pNB}$ und $Q_{\Delta NB}$ zu erhalten, dass ausgehend von dem Signal mit Codefrequenz ein zweites Signal Δ und ein zweites punktuelles Signal erzeugt werden (214), dass das zweite Signal Δ mit dem Signal $I_{WB}$ bzw. mit dem Signal $Q_{WB}$ multipliziert wird (215, 216), dass das zweite punktuelle Signal mit dem Signal $I_{WB}$ und dem Signal $Q_{WB}$ multipliziert wird (217, 218), und dass die aus diesen Multiplikationen entstehenden Signale integriert werden, um Signale $I_{pWB}$, $I_{\Delta WB}$, $Q_{pWB}$ und $O_{\Delta WB}$ zu erhalten.

4. Verfahren nach Anspruch 3, **dadurch gekennzeichnet, dass** die Signale $I_{pWB}$, $I_{\Delta WB}$, $Q_{pNB}$ und $Q_{\Delta NB}$ in einem ersten Phasendiskriminator (220), der dem Breitbandsignal und dem Schmalbandsignal gemeinsam ist, verwendet werden, um die Phase der Trägerwelle zu erhalten und nach Filterung (221) den Oszillator (201) zu steuern, der es ermöglicht, das Signal auf der Frequenz der Trägerwelle zu erhalten.

5. Verfahren nach Anspruch 4, **dadurch gekennzeichnet, dass** im ersten Phasendiskriminator (220) vor der eigentlichen Diskriminierung die Eingangssignale gemäß durch die folgenden Formeln bestimmten Anteilen gemischt werden:

$$I_{popt} = \alpha\, I_{pWB} + \beta\, I_{pNB}$$

$$Q_{popt} = \alpha\, Q_{pWB} + \beta\, Q_{pNB}$$

6. Verfahren nach Anspruch 5, **dadurch gekennzeichnet, dass** die Parameter $\alpha$ und $\beta$ durch folgende Formeln bestimmt werden:

$$\alpha = \frac{\sigma_{NB}^2}{\sigma_{NB}^2 + \sigma_{WB}^2}$$

$$\beta = \frac{\sigma_{WB}^2}{\sigma_{NB}^2 + \sigma_{WB}^2}$$

in denen die Parameter $\sigma_{NB}$ und $\sigma_{WB}$ ausgehend von der Anzahl von unterdrückten Tastproben C und der Gesamtanzahl von Tastproben $N_0$ durch

folgende Formeln geschätzt werden:

$$\sigma_{WB}^2 = 1/(C/N_{0\,WB})$$

$$\sigma_{NB}^2 = 1/(C/N_{0\,NB})$$

7. Verfahren nach einem der Ansprüche 5 oder 6, **dadurch gekennzeichnet, dass** die Signale $I_{pWB}$, $I_{\Delta WB}$, $Q_{pWB}$, $Q_{\Delta WB}$, $I_{pNB}$, $I_{\Delta NB}$, $Q_{pNB}$ und $Q_{\Delta NB}$ in einem zweiten, dem Breitbandkanal und dem Schmalbandkanal gemeinsamen Phasendiskriminator (222) verwendet werden, um die Einstellung der beiden Codes zu erhalten und nach der Filterung (223) den Oszillator (208) zu steuern, so dass das Signal mit der Codefrequenz erhalten werden kann.

8. Verfahren nach Anspruch 7, **dadurch gekennzeichnet, dass** im zweiten Phasendiskriminator (222) vor der eigentlichen Diskriminierung die Eingangssignale gemäß durch die folgenden Formeln bestimmten Anteilen gemischt werden:

$$I_{\Delta opt} = (aI_{\Delta WB} + bI_{\Delta NB})$$

$$Q_{\Delta opt} = (aQ_{\Delta WB} + bQ_{\Delta NB})$$

9. Verfahren nach Anspruch 8, **dadurch gekennzeichnet, dass** die Parameter a und b durch die folgenden Formeln bestimmt werden:

$$a = \frac{\rho_{WB}^2 \sigma_{NB}^2}{(\rho_{NB}^2 \sigma_{WB}^2 + \rho_{WB}^2 \sigma_{NB}^2)} \times \frac{1}{S_{WB}}$$

$$b = \frac{\rho_{NB}^2 \sigma_{WB}^2}{(\rho_{NB}^2 \sigma_{WB}^2 + \rho_{WB}^2 \sigma_{NB}^2)} \times \frac{1}{S_{NB}}$$

in denen die Größen $S_{WB}$ und $S_{NB}$ den Neigungen der Antwortkurven der Diskriminatoren (220, 222) entsprechen, die auf der mittleren Höhe dieser Kurven gemessen werden, und die Größen $\rho_{WB}$ und $\rho_{NB}$ die normalisierten Neigungen der Diskriminatoren sind, die mittels Division der Neigung S durch einen Faktor $\sigma_\Delta$ erhalten werden, der durch folgende Formel bestimmt wird:

$$\sigma_\Delta = [1 - A(2d)]$$

in der A die normalisierte Autorisationsfunktion des gefilterten Ausbreitungscodes ist, derart, dass gilt A(0) = 1, und dass 2d der Wert der Abweichung zwischen dem vorauslaufenden Code und dem Verzögerungscode ist, der verwendet wird, um den $\Delta$-Code zu erzeugen.

## Claims

1. Method of signal processing in the presence of interference, this signal comprising a first wideband channel (WB) and a second narrowband channel (NB) modulating one and the same carrier (FO), **characterized in that** a single phase loop (220, 221, 201-207) and a single code loop (222, 223, 208-218) are used to process the two channels simultaneously.

2. Method according to Claim 1, **characterized in that** in the phase loop a signal is generated (201) at the frequency of the carrier, it is sine and cosine phase-shifted (202, 203) and the first channel and the second channel are demodulated synchronously with these two phase-shifted signals so as to obtain a signal $I_{WB}$ and a signal $Q_{WB}$ (204, 206) and a signal $I_{NB}$ and a signal QNB (205, 207) respectively.

3. Method according to Claim 2, **characterized in that** in the code loop a signal is generated (208) at the frequency of the code of the wideband signal, a first punctual code and a first $\Delta$ code (209) are generated on the basis of this signal, the first $\Delta$ code is multiplied respectively with the signal $I_{NB}$ and the signal $Q_{NB}$ (210, 211), the first punctual code is multiplied with the signal $I_{NB}$ and the signal $Q_{NB}$ (212, 213), the signals resulting from these multiplications are integrated to obtain signals $I_{PNB}$, $I_{\Delta NB}$, $Q_{PNB}$ and $Q_{\Delta NB}$, a second $\Delta$ signal and a second punctual signal are generated on the basis (214) of the code frequency signal, the second $\Delta$ signal is multiplied respectively with the signal $I_{WB}$ and the signal $Q_{WB}$ (215, 216), the second punctual signal is multiplied by the signal $I_{WB}$ and the signal $Q_{WB}$ (217, 218), and the signals resulting from these multiplications are integrated to obtain signals $I_{PWB}$, $I_{\Delta WB}$, $Q_{PWB}$ and $Q_{\Delta WB}$.

4. Method according to Claim 3, **characterized in that** the signals $I_{PWB}$, $I_{\Delta WB}$, $Q_{PNB}$ and $Q_{\Delta NB}$ are used in a first phase discriminator (220) common to the two signals, wideband and narrowband, to obtain the phase of the carrier and to drive, after filtering (221), the oscillator (201) making it possible to obtain said signal at the frequency of the carrier.

5. Method according to Claim 4, **characterized in that** in the first phase discriminator (220) the input signals are mixed before the discrimination proper according to proportions determined by the formulae:

$$I_{p\,opt} = \alpha\,I_{pWB} + \beta_{Ip\,NB}$$

$$Q_{p\,opt} = \alpha Q_{p\,WB} + \beta\,Q_{p\,NB}$$

6. Method according to Claim 5, **characterized in that** the parameters $\alpha$ and $\beta$ are determined by the formulae:

$$\alpha = \frac{\sigma_{NB}^2}{\sigma_{NB}^2 + \sigma_{WB}^2}$$

$$\beta = \frac{\sigma_{WB}^2}{\sigma_{NB}^2 + \sigma_{WB}^2}$$

in which the parameters $\sigma_{NB}$ and $\sigma_{WB}$ are estimated on the basis of the number of samples deleted C and of the total number of samples No by the formulae:

$$\sigma_{wb}^2 = 1/(C/N_{0\ WB})$$

$$\sigma_{Nb}^2 = 1/(C/N_{0\ NB})$$

7. Method according to any one of Claims 5 or 6, **characterized in that** the signals $I_{PWB}$, $I_{\Delta WB}$, $Q_{PWB}$, $Q_{\Delta WB}$, $I_{PNB}$, $I_{\Delta NB}$, $Q_{PNB}$ and $Q_{\Delta NB}$ are used in a second phase discriminator (222) common to the two channels, wideband and narrowband, to obtain the setting of the two codes and to drive, after filtering (223), the oscillator (208) making it possible to obtain said signal at the code frequency.

8. Method according to Claim 7, **characterized in that** in the second phase discriminator (222) the input signals are mixed before the discrimination proper according to proportions determined by the formulae:

$$I_{\Delta\,opt} = (aI_{\Delta WB} + bI_{\Delta NB})$$

$$Q_{\Delta\,opt} = (aQ_{\Delta WB} + bQ_{\Delta NB})$$

9. Method according to Claim 8, **characterized in that** the parameters a and be are determined by the formulae:

$$a = \frac{\rho_{WB}^2 \sigma_{NB}^2}{\rho_{NB}^2 \sigma_{WB}^2 + \rho_{WB}^2 \sigma_{NB}^2)} \times \frac{1}{S_{WB}}$$

$$b = \frac{\rho_{NB}{}^2 \sigma_{WB}{}^2}{\left(\rho_{NB}{}^2 \sigma_{WB}{}^2 + \rho_{WB}{}^2 \sigma_{NB}{}^2\right)} \times \frac{1}{S_{NB}}$$

in which the terms $S_{WB}$ and $S_{MB}$ correspond to the slopes of the response curves of the discriminators (220, 222) as measured at the central level of these curves, and the terms $\rho_{WB}$ and $\rho_{MB}$ are the normalized slopes of the discriminators as obtained by dividing the slope S by a factor $\sigma_\Delta$ determined by the formula:

$$\sigma_\Delta = [1 - A(2d)]$$

in which A is the normalized authorization function of the filtered spreading code such that A(0) = 1, and 2d is the value of the deviation between the early code and the late code used to generate the $\Delta$ code.

Fig. 1

EP 1 488 536 B1

Fig. 2

EP 1 488 536 B1